# EUROPEAN PATENT APPLICATION

(11) **EP 3 260 588 A1**
(43) Date of publication of application: **27.12.2017**
(21) Application number: 16175480.9
(22) Date of filing: 21.06.2016
(51) Int. Cl.: D04H 1/4209, B32B 5/02, B32B 5/26, B29C 51/00, B65D 19/00, B65D 19/38, D04H 1/425, D04H 1/4266, D04H 1/4274

(54) **A LOAD CARRIER MADE FROM RECYCLED AND RECYCLABLE MATERIALS**

(71) Applicant: Fibreuse nv, 2600 Berchem (BE)
(72) Inventor: Naets, Sylvain, 2600 Berchem (BE); Galle, Rudy, 9750 Zingem (BE); Sels, Jesse, 2630 Aartselaar (BE)
(74) Representative: Gevers Patents

(57) **Abstract**

The present invention is directed to a load carrier at least partially made of a nonwoven composite material board, said a nonwoven composite material board comprising:
- unravelled natural fibers and/or glass fibers, and
- thermoplastic flakes.

In addition, the present invention is directed to a proces for manufacturing a load carrier comprising mixing unravelled natural fibers and/or glass fibers, and thermoplastic flakes, and thermoforming said mix into a nonwoven composite material layer.

It should be clear that the present invention is applied to any type of load carriers, such as boxes, cases, crates, top decks, and the like, and in particular pallets.

## Description

### FIELD OF THE INVENTION

The present invention relates to a load carrier at least partially made of a nonwoven composite material board.

In addition, the present invention relates to a process for manufacturing a load carrier at least partially made of a nonwoven composite material board.

### BACKGROUND

In the context of the present invention, a pallet is a flat transport structure that supports goods in a stable fashion while being lifted by a forklift, pallet jack, front loader, work saver or other jacking device. A pallet is the structural foundation of a unit load which allows handling and storage efficiencies.
Conventional pallets are wooden, but can also be made of plastic, metal, paper, and recycled materials, depending on the field of use.

In particular in the use of recycled materials for pallets, many attempts are being made aiming to lower environmental impact. For example TW201113197 relates to a method for manufacturing an environmentally friendly pallet wherein agriculture waste or waste woods are fiberized and blended with waste paper slurry and crunched waste plastic. Subsequently, this blend is injection molded into a pallet.

However, it is commonly known that injection molding is a rather expensive technique for producing relatively simple designs at relatively low volumes.

Another example is BE901742 wherein industrial waste material, is used to produce single-use non-returnable transport pallets, crates, etc. the waste materials combined are waste plastics and files production items, waste cardboard from damaged or used boxes, bobbins, and waste wood from templates, reject pallets, or garden prunings and cellulose fibers are shredded and mixed. Then a dry adhesive bonding compound is added, the mixture heated and fed to a press to produce the pallets.

However, a clear drawback is the fact that the pallets are only intended for single use and do not have the characteristics required for several use cycles as for example in a pallet a pooling system.

Other examples of creating a pallet or load bearing device are WO2014058665, WO2004011337 describing a construction of a foam and/or cellular core surrounded by top and bottom skin layers. Further, US2005040307 describes a load carrier made by molding plastics (extrustion, injection moulding,...) and whereby the strength of the final structure comes from a ribbed structure of the material. The pallets or load carriers described all require complex processing and/or complex structureal built-up in order to obtain required mechanical properties.

It is therefore an object of the present invention to provide a load carrier, in particular a pallet, having the characteristics required for being used in multiple use cycles, e.g. in a pallet pooling system, and in heavy duty applications, and which has a simple structural build-up without complex processing steps. Impact strength, swell, heat resistance, heat retardancy, dimensional stability, water absorbance, or racking capability may be at least comparable with or improved versus conventional pallets.

In another object of the present invention a load carrier is provided having impact strength and load characteristics comparable with the characteristics of conventional wooden pallets, such combined with significantly lower weight, resulting in significantly decreasing transport costs.

Another object of the present invention is to provide a load carrier made of recyclable and/or recycled materials.

Further, it is an object of the present invention to provide an improved method for manufacturing load carriers allowing using recycled and recyclable materials.

Further, the present invention provides a process allowing using porous, hydroscopic, visco-elastic raw materials as a base material in the manufacturing of durable, re-usable, and dimensionally stable load carriers.

A further general object of the present invention is to allow manufacturing of load carriers of different quality levels and end use, tailored for one way use as well as multiple use, for light duty applications as well as heavy duty.

### SUMMARY OF THE INVENTION

The present invention is directed to a load carrier at least partially made of a nonwoven composite material board, said a nonwoven composite material board comprising:
unravelled natural fibers and/or glass fibers, and
   - thermoplastic flakes, optionally including an amount of plastic fibers.

In addition, the present invention is directed to a proces for manufacturing a load carrier comprising mixing unravelled natural fibers and/or glass fibers, and thermoplastic flakes, optionally including an amount of plastic fibers, and thermoforming said mix into a nonwoven composite material layer.

It should be clear that the present invention is applied to any type of load carriers, such as boxes, cases, crates, top decks, and the like, and in particular pallets.

### DETAILED DESCRIPTION

In an embodiment in accordance with the present invention, a load carrier at least partially made of a nonwoven composite material board, said a nonwoven composite material board comprising:
unravelled natural fibers and/or glass fibers, and
   - thermoplastic flakes, optionally including an amount of plastic fibers.

In the context of the present invention, the raw natural materials such as jute, hemp, cocos, etc are treated by a bast fibre opening machine or tearing machine to be unravelled to fiber stage. Unravelled natural fibers are also called bast fibers and may be up to severeal centimeters long. The unravelled natural fibers may comprise any natural fiber as for example jute, flax, hemp, sisal, coco, or bamboo, or animal fibers. Alternatively, or in combination with unravelled natural fibers also glass fibers may be used.

The most important types of natural fibres used in load carriers according to the present invention are flax, hemp, jute, kenaf, cocos and sisal due to their properties and availability. Using jute fiber has many advantages. Firstly it has wood like characteristics as it is a bast fibre. Jute has high specific properties, low density, less abrasive behaviour to the processing equipment, good dimensional stability and harmlessness.. The fiber has a high aspect ratio, high strength to weight ratio, and has good insulation properties. Jute is a low cost eco-friendly product and is abundantly available, easy to transport.

In the context of the present invention, the plastic fibers may be freshly produced fibers or may originate from any type of waste or recycled plastic fiber sheet material, such as textile, fabric, carpet, clothing, or big bags (i.e. flexible intermediate bulk containers (FIBC)). In case of recycled plastic fibers, they may be obtained by unravelling or tearing, and optionally subsequently combing, recycled plastic fiber material, woven and non-woven. The plastic fiber material may be of any type of plastic used in the production of plastic fiber materials, woven or nonwoven, as for example polypropylene fibers, polyvinyl fibers, polyethylene fibers, polyester fibers, etc.

In the context of the present invention, the thermoplastic flakes may be obtained in a ready to use configuration from various sources (for example third party vendors) providing the recycled thermoplastic flakes. However, in some embodiments of the present invention, the collection of the thermoplastic flakes is obtained from a collection of thermoplastic material to be recycled. The collection of thermoplastic material received is sorted according to various factors such as type of material, color of material, or the like, and is then comminuted to form thermoplastic flakes of size preferably ranging between 3mm and 15mm. Thereafter, the thermoplastic flakes having higher weight density are separated from the thermoplastic flakes having lower weight density; preferably by means of centrifugal process, or by separation in water, such that the light weight thermoplastic flakes having a density lower than water is separated from the flakes having a density greater than water. Light weight thermoplastic flakes may require other techniques for blending with unravelled natural and/or glass fibers, than high weight thermoplastic flakes.

A load carrier in accordance with the present invention comprises a core of entangled unravelled natural fibers and/or glass fibers embedded in a plastic matrix having strength and rigidity present without the need for additional reinforcing material or structure to create the envisaged mechanical properties. The improved mechanical properties result from the mechanical entanglement of the used raw materials and the thermoplastic flakes, through nonwoven entanglement and thermoforming the entangled structure. Including an amount of plastic fibers in the thermoplastic flakes may enhance entanglement.

In an embodiment in accordance with the present invention, a load carrier is provided at least partially made of a nonwoven composite material board comprising at least 40%weight at least 50%weight, or at least 60%weight, or at least 80%weight, or at least 90%weight of unravelled natural fibers and/or glass fibers.

In another embodiment in accordance with the present invention, a load carrier is provided at least partially made of a nonwoven composite material board comprising less than 60%weight, or less than 50%weight, or less than 40%weight, or less than 20%weight or less than 10%weight, or less than 5% of plastic flakes, optionally including an amount of plastic fibers. The amount of plastic fibers may vary between 0 and 80% of the total amount of thermoplastic flakes and fibers, preferably between 0 and 50%, more preferably between 0 and 25%, and even more preferably between 0 and 10%.

Without being bound by any theory, it is believed that using unravelled fibers as described above results in nonwoven composite material having a 3-dimensional netting structure embedded in a plastic matrix, providing a load carrier in accordance with the present invention the characteristics required for being used in multiple use cycles, e.g. in a pallet pooling system. For example impact strength, racking capability, swelling (i.e.water absorbance) and heat resistance during wash cycles are important characteristics.

Further, impact strength and load characteristics may be comparable with the characteristics of conventional wooden pallets, such combined with significantly lower weight, resulting in significantly decreasing transport costs. For example, a typical wooden pallet weighing 20-25 kg may be replaced by a pallet weighing less than 15 kg, or even less than 12kg.

Another benefit is that these load carriers are made of recyclable and/or recycled materials.

A load carrier in accordance with the present invention may further comprise a thermoharder. Such thermoharder may be any type of thermoharder material allowing mixing with a blend of unravelled natural fibers and/or glass fibers, and thermoplastic flakes. Such thermoharder may be in powder form or in liquid form, for example a polyester-based powder, or an epoxy-based powder or liquid, or a formaldehyde-based powder or liquid, or polyurethane liquid resin, or a water glass based binder as described in WO2013079635 herewith incorporated by reference, or a biological binding agent including natural and/or synthetic biological substances, conjugates thereof, or derivatives including polymers thereof. An example may be a polysaccharide based binding agent.

Using a thermoharder may result in strengthening the plastic fiber matrix and may enhance the formation of even more durable and rigid nonwoven composite material board structure.

A load carrier in accordance with the present invention may be at least partially made of a nonwoven composite material board comprising less than 50%weight or, less than 25%weight, or less than 20%weight or less than 10%weight, or less than 5% of said thermoharder.

In a particular embodiment of the present invention, a load carrier may be at least partially made of a nonwoven composite material board comprising between 40 and 90%weight unravelled natural fibers and/or glass fibers, between 40 and 5%weight thermoplastic flakes, and between 40 and 5%weight thermoharder.

In another particular embodiment of the present invention, a load carrier may be at least partially made of a nonwoven composite material board comprising between 50 and 75%weight unravelled natural fibers and/or glass fibers, between 10 and 40%weight thermoplastic flakes, and between 10 and 40%weight thermoharder.

In another particular embodiment of the present invention, a load carrier may be at least partially made of a nonwoven composite material board comprising between 50% and 75%weight unravelled natural fibers and/or glass fibers, 15 and 40%weight thermoplastic flakes, and between 10 and 30%weight thermoharder.

Without being bound by any theory, it is believed that because of the fact that the core fiber due it's high melting point is kept intact during processing and is mixed with the unraveled natural fibers and/or glass fibers, whereas the outer layer becomes part of the plastic matrix, an even more strong and rigid structure may be obtained.

In addition, a load carrier according to the present invention may be at least partially made of nonwoven composite material board, said nonwoven composite material board made of a mono-layer of thermoformed and pressed nonwoven composite material, or made of a multilayer of thermoformed nonwoven composite material layers pressed onto each other.

Alternatively, within a multilayer of nonwoven composite material layers several monolayers may be alternated with layers of alternative materials.

A load carrier according to the present invention may be at least partially made of nonwoven composite material board having at one or more sides an outer layer treated for painting or other finishing steps.

Further, a load carrier according to the present invention may be at least partially made of nonwoven composite material board having at one or more sides one or more finishing layers, such as for example coating layers.

Further, the present invention provided a proces for manufacturing a load carrier comprising mixing unravelled natural fibers and/or glass fibers, and thermoplastic flakes, and thermoforming said mix into a nonwoven composite material layer.

In the context of the present invention, thermoforming may be any type of thermoforming suitable for composite board formation (e.g. thermobonding, heat pressing, moulding, vacuum molding, pressure molding, thermocompression etc), and may comprise any type of heating having the capacity to sufficiently raise the temperature within the core of the composite material mix during thermoforming, such as for example steam heating or steam injection heating or microwave heating or air heating (i.e. blowing hot air over and/or through the material).

The temperature within the core of the composite material mix during thermoforming may be at least 100°C, or at least 120°C, or even at least 140°C.

A process according to the present invention may comprises mixing between 40 and 90%weight unravelled natural fibers and/or glass fibers, and between 10 and 60%weight thermoplastic flakes.

Though natural fibers such as jute etc are porous, hydroscopic, visco-elastic materials, a process according to the present invention enables its use as a base material in the manufacturing of durable and re-usable load carriers.

The thermoplastic flakes, may have a melting point of at least 100°C, or at least 120°C, or even at least 140°C, such that during thermoforming the unravelled natural fibers (or the glass fibers) become sufficiently embedded within a plastic melt.

In a particular embodiment of the present invention, between 40 and 90%weight unravelled natural fibers and/or glass fibers, between 40 and 5%weight thermoplastic flakes, and between 40 and 5%weight thermoharder may be mixed.

In another particular embodiment of the present invention, between 50 and 75%weight unravelled natural fibers and/or glass fibers, between 10 and 40%weight thermoplastic flakes, and between 10 and 40%weight thermoharder may be mixed.

The natural or glass fibers, and the thermoplastic flakes, optionally including an amount of plastic fibers, may be blended by any conventional technique suitable for intermixing fibers and flakes, such as airlaying, wet-laying, spunlacing, or a combination thereof.

In a particular embodiment, when using airlaying for blending natural or glass fibers with plastic, preferably the lightweight fraction of thermoplastic flakes may be used.

The unravelled natural fibers and/or glass fibers (and the plastic fibers optionally used) may not be shredded, cut, milled of treated by any other technique with the purpose of decreasing the fibre length as compared to the unravelled natural fiber length or the original plastic fiber length.

The unravelled natural fiber length or glass fiber length may be at least 0,5cm, or at least 0.7cm, of which at least 50% is at least 1 cm, or a least 2cm, in order to obtain a desired 3-dimensional netting structure. Preferably the fiber length is at least 1.2cm, or preferably at least 1.5cm, or even more preferably at least 4 cm.

The thermoharder may be mixed with the unravelled natural fibers and/or glass fibers, and the thermoplastic flakes, by any type of conventional technique for mixing a powder into a blend of fibers, for example by means of airblowing or spreading onto the fiber layer. Alternatively in case of a liquid thermoharder, spraying or immersing may be used, for example a needle-punched material layer may be immersed in a bath of liquid thermoharder.

Subsequently to thermoforming the nonwoven composite material layer may be cold pressed, thereby forming a mono-layer nonwoven composite material board. Cold pressing may have the advantage of relaxing the nonwoven composite material board in order to decrease breaking risk. Alternatively, also heat pressing, or vacuum forming may be used.

Another alternative is that the step of thermoforming may comprise immediate heat pressing or vacuum forming the nonwoven composite material layer into a mono-layer nonwoven composite material board.

In a preferred embodiment of the present invention, a process for manufacturing a load carrier is provided comprising thermoforming a plurality of nonwoven composite material layers and connecting them by by pressing, vacuum forming, gluing, or welding, thereby forming a multilayer nonwoven composite material board. Alternatively, within a multilayer of nonwoven composite material layers several monolayers may be alternated with layers of alternative materials.

A mono- or multilayer of composite material board may then further proceed to sawing or cutting into a plurality of elongated composite material boards for being connected into a load carrier structure.

The elongated composite materials boards may be glued or nailed to each other or onto block elements as for example used in block pallets.

A process for manufacturing a load carrier according to the present invention may further comprise a finishing treatment onto one or more sides of the nonwoven composite board material, for example coating, painting, waxing, etc.

Alternatively such process may further comprise providing one or more finishing layers and pressing said one or more finishing layers onto one or more sides of the nonwoven composite board material. Such finishing layer may be for example a coating layer.

In an embodiment of the present invention, a particular process for manufacturing a load carrier is provided comprising:
- mixing unravelled natural fibers and/or glass fibers, thermoplastic flakes, optionally including an amount of plastic fibers, and thermoharder powder
- Pre-heating the mix in pre-heating mould
- transporting to pre-heated fiber layer into a steam injection oven, thereby forming a nonwoven composite material layer
- cold pressing the nonwoven composite material layer
- pressing several nonwoven composite material layers onto each other thereby forming a multilayer nonwoven composite board
- sawing/cutting the multilayer nonwoven composite board into elongated boards
- nailing the elongated boards onto block elements.

In another embodiment of the present invention, an alternative process for manufacturing a load carrier is provided comprising:
- mixing unravelled natural fibers and/or glass fibers, and thermoplastic flakes, optionally including an amount of plastic fibers, by airlaying, wet-laying, spunlacing, or a combination thereof, resulting in a provisional non-woven composite fiber mat.
- sprinkling thermoharder liquid onto this composite fiber mat, or immersing the mat into a thermoharder liquid bath
- heat pressing the immersed mat into a nonwoven composite material layer
- pressing several nonwoven composite material layers onto each other thereby forming a multilayer nonwoven composite board
- sawing/cutting the multilayer nonwoven composite board into elongated boards
- nailing the elongated boards onto block elements.

The present invention allows manufacturing of load carriers of different quality levels and end use, tailored for one way use as well as multiple use, for light duty applications as well as heavy duty. The difference in quality (and price) level will come from differences in mixtures of raw materials, differences in processing steps and/or differences in thickness of the composite material board used to create the load carriers.

## Claims

1. A load carrier at least partially made of a nonwoven composite material board, said a nonwoven composite material board comprising:
unravelled natural fibers and/or glass fibers, and
thermoplastic flakes

2. A load carrier according to claim 1, said a nonwoven composite material board comprising at least 40%weight at least 50%weight, or at least 60%weight, or at least 80%weight, or at least 90%weight of unravelled natural fibers and/or glass fibers.

3. A load carrier according to claims 1 or 2, said a nonwoven composite material board comprising less than 60%weight, or less than 50%weight, or less than 40%weight, or less than 20%weight or less than 10%weight, or less than 5% of thermoplastic flakes.

4. A load carrier according any of claims 1 to 3, said a nonwoven composite material board further comprising a thermoharder.

5. A load carrier according to claim 4, said a nonwoven composite material board comprising less than 50%weight or, less than 25%weight, or less than 20%weight or less than 10%weight, or less than 5% of thermoharder.

6. A load carrier according to claim 5, said a nonwoven composite material board comprising between 50 and 75%weight unravelled natural fibers and/or glass fibers, between 10 and 40%weight thermoplastic flakes, and between 10 and 40%weight thermoharder.

7. Process for manufacturing a load carrier comprising mixing unravelled natural fibers and/or glass fibers, and thermoplastic flakes, and thermoforming said mix into a nonwoven composite material layer.

8. Process for manufacturing a load carrier according to claim 7, wherein thermoforming comprises steam heating or steam injection heating or microwave heating or air heating.

9. Process for manufacturing a load carrier according to claims 8 or 9, wherein between 40 and 90%weight unravelled natural fibers and/or glass fibers, between 10 and 60%weight thermoplastic flakes are mixed.

10. A Process for manufacturing a load carrier according to any of claims 7 to 8, wherein between 40 and 90%weight unravelled natural fibers and/or glass fibers, between 40 and 5%weight thermoplastic flakes, and between 40 and 5%weight thermoharder are mixed.

11. A Process for manufacturing a load carrier according to any of claims 7 to 9 wherein the step of mixing is comprises airlaying, wet-laying, spunlacing, or a combination thereof.

12. Process for manufacturing a load carrier according to any of claims 7 to 10, wherein subsequently to thermoforming the nonwoven composite material layer is cold pressed, heat pressed, or vacuum formed, thereby forming a mono- or multilayer nonwoven composite material board.

13. Process for manufacturing a load carrier according to any of claims 8 to 11, comprising thermoforming a plurality of nonwoven composite material layers and connecting them by pressing, vacuum forming, gluing or welding, thereby forming a multilayer nonwoven composite material board.
